(19) Europäisches Patentamt
European Patent Office
Office européen des brevets

(11) Veröffentlichungsnummer : **0 126 026**
**B1**

(12) **EUROPÄISCHE PATENTSCHRIFT**

(45) Veröffentlichungstag der Patentschrift : **02.12.87**

(51) Int. Cl.⁴ : **D 06 P 3/10**, D 06 P 3/87

(21) Anmeldenummer : **84810185.3**

(22) Anmeldetag : **13.04.84**

# (54) Verfahren zum Färben von Seide oder seidenhaltigen gemischten Fasermaterialien.

(30) Priorität : **20.04.83 CH 2125/83**

(43) Veröffentlichungstag der Anmeldung : **21.11.84 Patentblatt 84/47**

(45) Bekanntmachung des Hinweises auf die Patenterteilung : **02.12.87 Patentblatt 87/49**

(84) Benannte Vertragsstaaten : **CH DE FR GB IT LI**

(56) Entgegenhaltungen :
**CH-B- 398 499**
**CH-B- 423 708**
**DE-B- 1 287 558**
**US-A- 2 895 785**
**US-A- 2 950 165**
**CHEMICAL ABSTRACTS, Band 94, Nr. 13, Juni 1981, Seite 72, Nr. 210155w, Columbus, Ohio, USA; H. KATO: "Dyeing condition and colorfastness of dichlorotriazine reactive dyes for wild silk"**
**Journal of the Society of Dyers and Colourists, vol. 98, pages 394-397 (1982)**
***Die Akte enthält technische Angaben, die nach dem Eingang der Anmeldung eingereicht wurden und die nicht in dieser Patentschrift enthalten sind.***

(73) Patentinhaber : **CIBA-GEIGY AG**
**Klybeckstrasse 141**
**CH-4002 Basel (CH)**

(72) Erfinder : **Rohrer, Rudolf**
**Steingrubenweg 75**
**CH-4125 Riehen (CH)**

**EP 0 126 026 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung liegt auf dem technischen Gebiet der Anwendung von Reaktivfarbstoffen zum Färben von Seide oder seidenhaltigen gemischten Fasermaterialien.

Textilien aus Naturseide oder Mischungen von Naturseide und Wolle können — je nach den gestellten Anforderungen — mit Produkten verschiedener Farbstoffklassen gefärbt werden. Vorwiegend werden in der Praxis Säure- und Metallkomplex-Farbstoffe, die auch für die Wollfärbung in Betracht kommen, eingesetzt. Die in neuerer Zeit erhöhten Anforderungen an den Standard der Nassechtheiten haben auch zum Einsatz von Reaktivfarbstoffen geführt. Angesichts der steigenden Anforderungen an Reaktivfärbungen in bezug auf Wirtschaftlichkeit, Applikationstechnik und Echtheitsniveau ist der erreichte technische Stand aber vielfach nicht voll befriedigend.

Der vorliegenden Erfindung lag die Aufgabe zugrunde, ein neues, verbessertes Verfahren zum Färben von Seide oder seidenhaltigen gemischten Fasermaterialien mit Reaktivfarbstoffen zu finden, das zu echten Färbungen führt.

Mit der vorliegenden Erfindung wird ein neues Verfahren vorgestellt, das die gestellten Anforderungen erfüllt.

Das Verfahren ist dadurch gekennzeichnet, dass man Seide oder seidenhaltige gemischte Fasermaterialien mit Reaktivfarbstoffen der Formel

$$D{-}[Y]_n \qquad (1)$$

worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe ist, und $[Y]_n$ für $n = 1$ bis 4 Reaktivreste Y steht, wobei Y 2,4-Difluor-5-chlor-pyrimidin-6-yl bedeutet, in wässrigem Medium bei einem pH oberhalb von 8, ohne Zusatz eines dispergierend- und quellend-wirkenden Mittels,

a) bei einer Temperatur von 20 bis 40 °C während 6 bis 48 Stunden färbt, oder

b) die Ware imprägniert und die imprägnierte Ware in feuchtem Zustand während 6 bis 48 Stunden bei einer Temperatur von 20 bis 60 °C lagert.

In dem erfindungsgemässen Verfahren wird Seide oder das seidenhaltige gemischte Fasermaterial entweder in einer wässrigen Foulardflotte bei einem pH oberhalb von 8, insbesondere von 9 bis 10, imprägniert und die so behandelte Ware in feuchtem Zustand während 6 bis 48 Stunden, insbesondere 24 Stunden, bei einer Temperatur von 20 bis 60 °C gelagert, oder in wässriger Flotte bei einem pH oberhalb von 8, insbesondere von 9 bis 10, und einer Temperatur von 20 bis 40 °C während 6 bis 48 Stunden, insbesondere 24 Stunden, gefärbt.

Unter einem dispergierend- und quellend-wirkenden Mittel wird üblicherweise Harnstoff, Thioharnstoff oder Natriumcyanacetat verstanden.

In dem erfindungsgemässen Verfahren werden bevorzugt verwendet :

a) Reaktivfarbstoffe der Formel (1), worin D der Rest eines Mono- oder Disazofarbstoffes ist ;

b) Reaktivfarbstoffe der Formel (1), worin D der Rest eines Schwermetall-Azofarbstoff-Komplexes ist ;

c) Reaktivfarbstoffe der Formel (1), worin D der Rest eines Anthrachinonfarbstoffes ist ;

d) Reaktivfarbstoffe der Formel (1), worin D der Rest eines Kupfer- oder Nickelphthalocyanins, Kupfer-Formazan-Komplexes oder Triphendioxazins ist ;

e) Reaktivfarbstoffe der Formel (1), worin D der Rest eines 1 : 2-Chrom- oder 1 : 2-Kobaltkomplexazofarbstoffes der Benzol- oder Naphthalinreihe ist, und das Chrom- bzw. Kobaltatom an jeweils eine metallisierbare Gruppe in ortho-Position zur Azobindung gebunden ist ;

f) Reaktivfarbstoffe der Formel

$$\left[D_1 - N = N - K\right]{-}\left[Q - Y\right]_n \qquad (2)$$

worin $D_1$ der Rest einer Diazokomponente der Benzol- oder Naphthalinreihe, K der Rest einer Kupplungskomponente der Benzol- oder Naphthalinreihe oder der heterocyclischen Reihe, Q eine Aminobenzoylamino-Gruppe oder ein Brückenglied —N(R)—, und R Wasserstoff oder gegebenenfalls substituiertes $C_{1-4}$-Alkyl ist, Y und n die für Formel (1) geltenden Bedeutungen haben, und der Reaktivrest an die Diazokomponente oder an die Kupplungskomponente gebunden ist, oder je ein oder

zwei Reaktivrest(e) sowohl an die Diazokomponente als auch an die Kupplungskomponente gebunden ist (sind), oder zwei Reaktivreste an die Kupplungskomponente oder an die Diazokomponente gebunden sind, oder zwei Reaktivreste an die Diazokomponente oder an die Kupplungskomponente und ein Reaktivrest an die Kupplungskomponente oder an die Diazokomponente gebunden sind ;

g) Reaktivfarbstoffe der Formel (2), worin R Wasserstoff oder Methyl ist.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo. Diejenigen Reaktivfarbstoffe, worin D der Rest eines Azofarbstoffes ist, enthalten als Substituenten insbesondere Methyl, Aethyl, Methoxy, Aethoxy, Benzoylamino, Amino, Acetylamino, Ureido, Sulfomethyl, Hydroxy, Carboxy, Halogen oder Sulfo.

Falls R in Formel (2) ein $C_{1-4}$-Alkylrest ist, kann dieser weitersubstituiert sein, z. B. durch Halogen, Hydroxy, Cyan, Alkoxy, Carboxy oder Sulfo. Als Beispiele für R seien die folgenden Substituenten genannt :

Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl.

Die Farbstoffe der Formel (1) enthalten mindestens einen Reaktivrest Y. Unter faserreaktiven Verbindungen sind solche zu verstehen, die mit den reaktiven Gruppen der Seide, den Hydroxygruppen der Cellulose oder mit den Amino-, Hydroxy- oder Thiolgruppen von natürlichen oder synthetischen Polyamiden bei Mischgeweben unter Bildung kovalenter chemischer Bindungen zu reagieren vermögen.

Erfindungsgemäss einsetzbare Reaktivfarbstoffe der Formel (1) sind bekannt. Sie können hergestellt werden, indem man in Farbstoffe mit dem Rest D oder in ein Farbstoffvorprodukt, in an sich bekannter Weise Reaktivreste Y einführt und dass man im Falle der Verwendung von Farbstoffvorprodukten, diese in die gewünschten Endfarbstoffe umwandelt.

Die Einführung der faserreaktiven Gruppe(n) Y in den Farbstoffrest D in der Formel (1) erfolgt in an sich bekannter Weise dadurch, dass diese Farbstoffreste mit einem oder mehreren den (die) Rest(e) Y einführenden oder bildenden Mittel(n) umsetzt, wobei der Rest D in Formel (1) funktionelle Gruppen, welche die Bindung der faserreaktiven Gruppe(n) Y ermöglichen, enthalten müssen. Solche zur Bindung der Reste Y geeignete Gruppen sind z. B. gegebenenfalls monoalkylierte Aminogruppen, wie beispielsweise $—NH_2$, $—N(CH_3)H$ oder $—N(C_2H_5)H$.

Vorzugsweise führt man in Farbstoffe, die eine oder zwei freie Aminogruppen enthalten, Reaktivreste durch Acylierung mit faserreaktiven Acylierungsmitteln ein.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist.

Beispiel für derartige, aus zwei oder mehr als zwei Komponenten zusammengesetzte Farbstoffe sind : Monoazo-, Disazo-, Metallkomplexazo-, Formazan- und Azomethinfarbstoffe.

Handelt es sich z. B. um einen Azofarbstoff, kann man eine Diazokomponente, die ausser der zu diazotierenden Aminogruppe eine Gruppe —N(R)H oder eine Aminobenzoylamino-Gruppe enthält, oder eine Kupplungskomponente, die eine Gruppe —N(R)H oder eine Aminobenzoylamino-Gruppe enthält mit einem Acylhalogenid umsetzen, und das so erhaltene Produkt anschliessend durch Kupplung mit der anderen Komponente in den gewünschten Azofarbstoff überführen, und gegebenenfalls eine weitere Umwandlungsreaktion anschliessen.

Nach dieser Verfahrensvariante können Reaktivfarbstoffe der Formel (1), die zwei Reaktivreste enthalten, hergestellt werden, in dem man eine Diazokomponente und eine Kupplungskomponente verwendet, die je eine Gruppe —N(R)H und/oder eine Aminobenzoylamino-Gruppe enthalten, und diese vor oder nach der Kupplung acyliert.

Farbstoffe der Formel (1), die zwei Reaktivreste enthalten, sind auch in der Weise herstellbar, dass man Farbstoffe verwendet, die im Rest D bereits einen Reaktivrest enthalten, oder die zwei acylierbare Gruppen —N(R)H enthalten, und diese zusammen acyliert. Liegen in den hergestellten Reaktivfarbstoffen zur Metallkomplexbildung befähigte Gruppen vor, können die Reaktivfarbstoffe auch nachträglich metallisiert werden.

Farbstoffe der Formel (1), die mehr als zwei Reaktivreste enthalten, sind z. B. in der Weise herstellbar, dass man Farbstoffe verwendet, die im Rest D bereits einen oder zwei Reaktivreste enthalten, und diese Farbstoffe mit weiteren Komponenten, die Reaktivreste enthalten oder in solche übergeführt werden können, umsetzt und gegebenenfalls eine weitere Umwandlungsreaktion anschliesst.

Grundsätzlich lassen sich die Reaktivfarbstoffe der Formel (1) sämtlicher Farbstoffklassen in an sich

bekannter Weise oder analog zu bekannten Verfahrensweisen herstellen, indem man von Vorprodukten oder Zwischenprodukten für Farbstoffe, die faserreaktive Reste enthalten, ausgeht, oder diese faserreaktive Reste in hierfür geeignete Zwischenprodukte mit Farbstoffcharakter einführt.

Die Acylierung der Aminofarbstoffe oder der Farbstoffvorprodukte mit den Acylhalogeniden erfolgt nach an sich bekannten Methoden, vorzugsweise in wässriger Lösung oder Suspension und in Gegenwart von alkalischen, säurebindenden Mitteln, z. B. wässriger Alkalihydroxide, -carbonate oder -bicarbonate.

Im folgenden sollen mögliche Ausgangsstoffe, die zur Herstellung der Reaktivfarbstoffe der Formel (1) verwendet werden können, einzeln genannt werden.

Als Aminofarbstoffe kommen besonders Farbstoffe der folgenden Strukturtypen in Betracht :

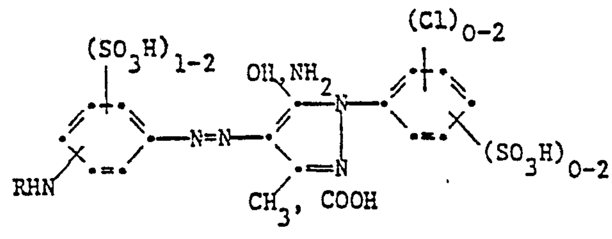

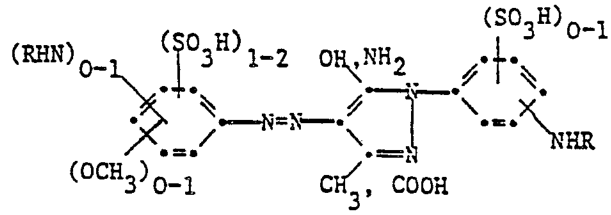

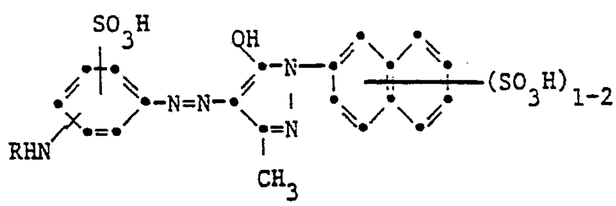

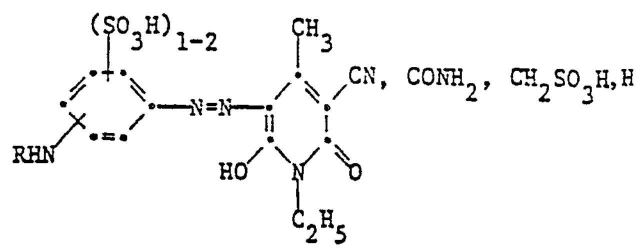

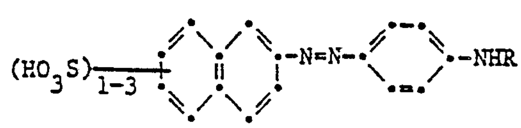

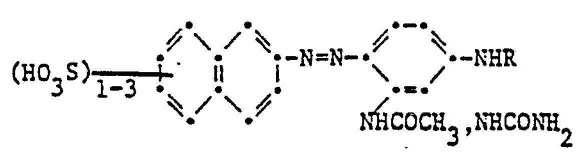

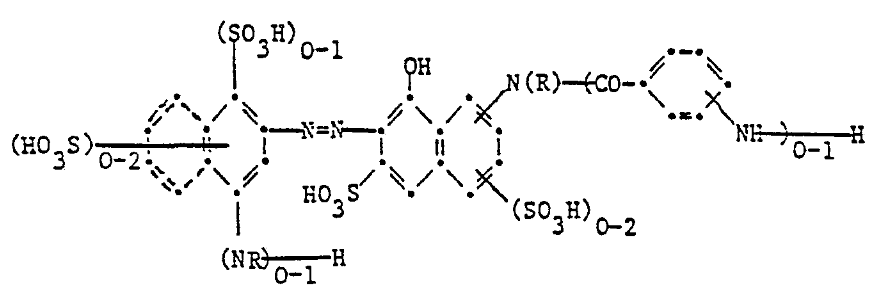

(Fortsetzung)

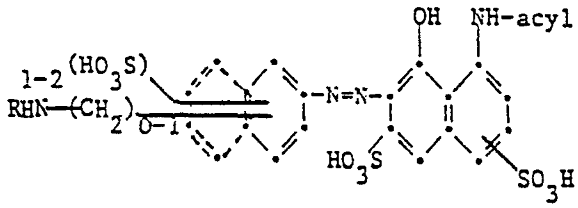

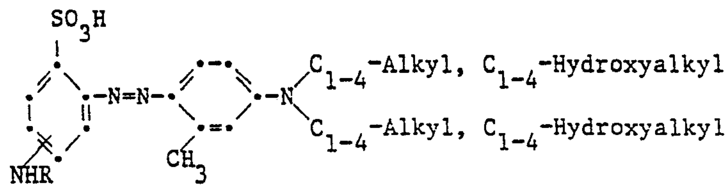

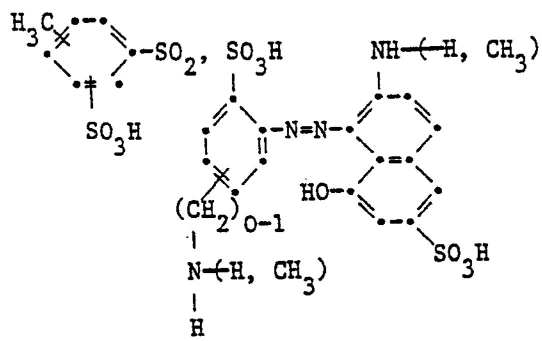

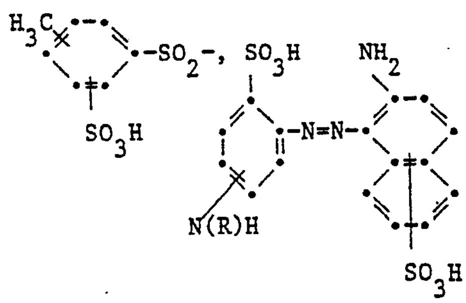

worin Acyl z. B. Acetyl oder gegebenenfalls substituiertes Benzoyl ist.

Metallkomplexe von Farbstoffen der Formeln :

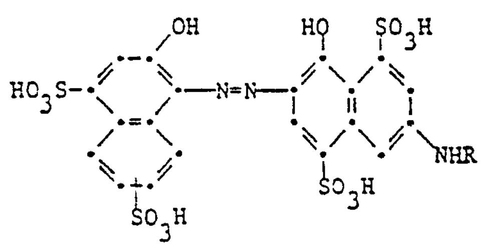

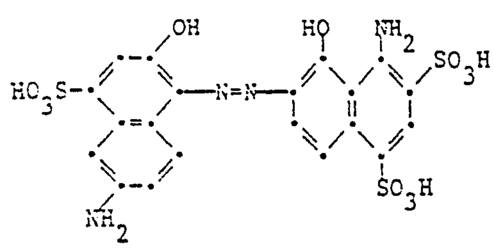

(Fortsetzung)

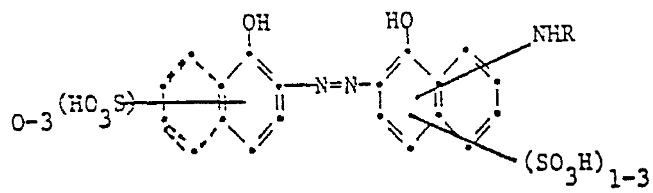

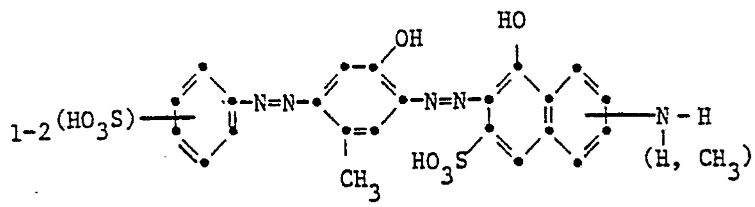

Als Metallatom sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d. h. sie können symmetrisch oder mit beliebigen anderen Ligandengruppen unsymmetrisch aufgebaut sein.

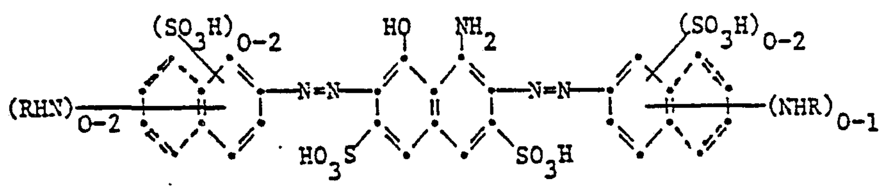

Die durch Strichelungen angedeuteten kondensierten Ringe stehen für alternativ mögliche Naphthalinsysteme.

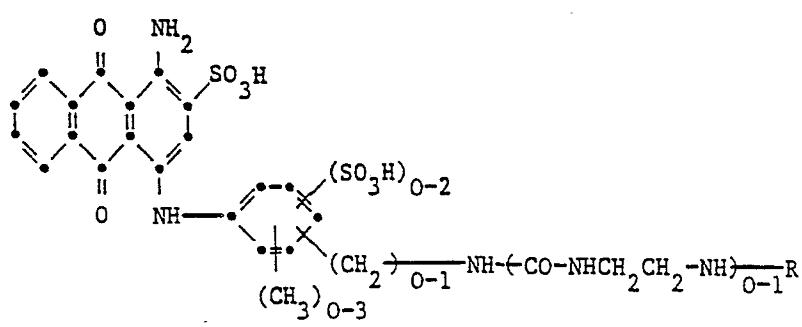

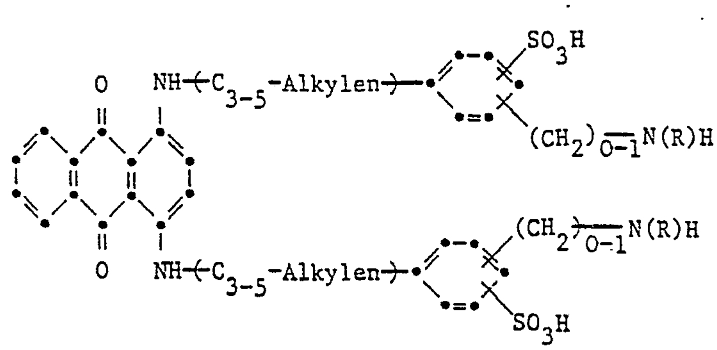

(Fortsetzung)

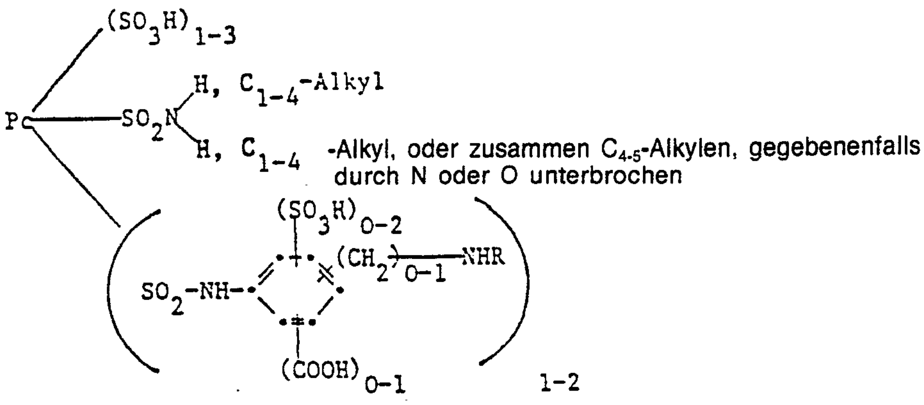


In dieser Formel steht Pc für den Cu- oder Ni-Phthalocyaninrest. Die Gesamtzahl der Substituenten am Pc-Gerüst ist dabei 4.

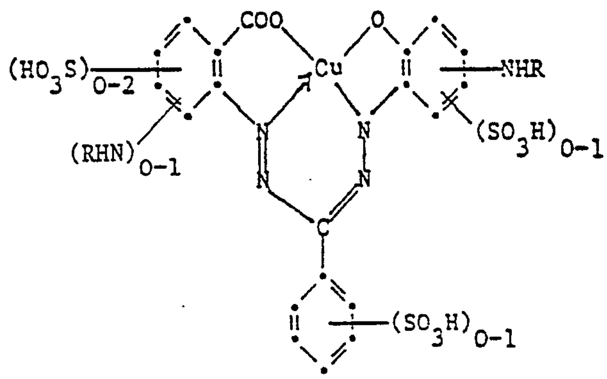

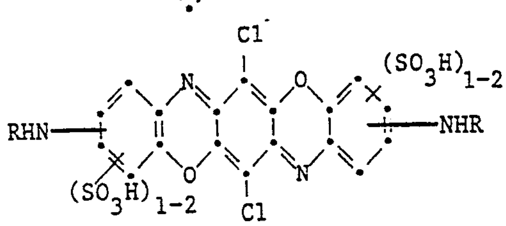

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (2) sind die folgenden :

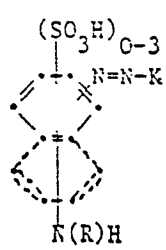

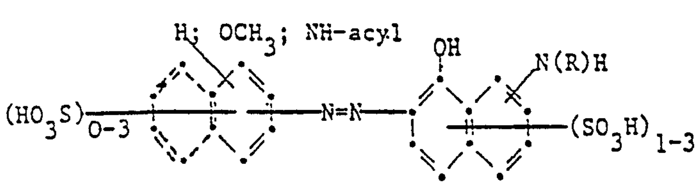

(Fortsetzung)

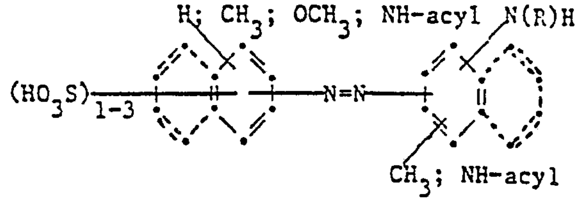

und

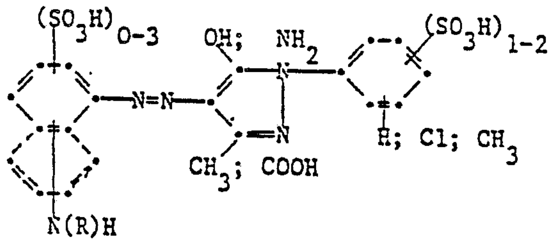

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (2) angegebenen Bedeutungen hat, sowie die Metallkomplex-Azofarbstoffe der Formeln

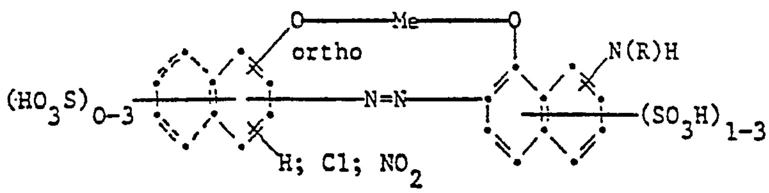

und

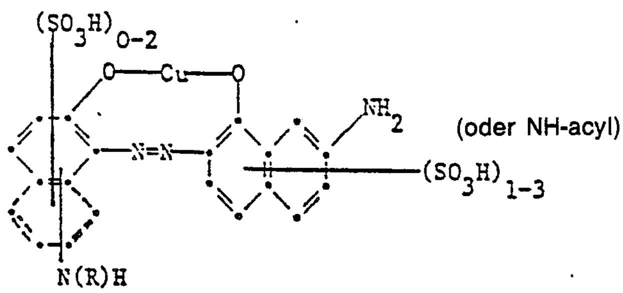

(oder NH-acyl)

worin R und acyl die oben angegebenen Bedeutungen haben und Me für Cu, Cr oder Co steht.

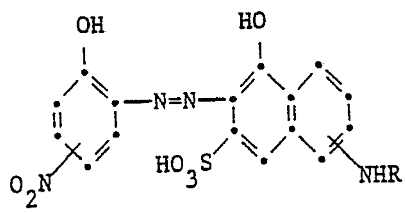

+

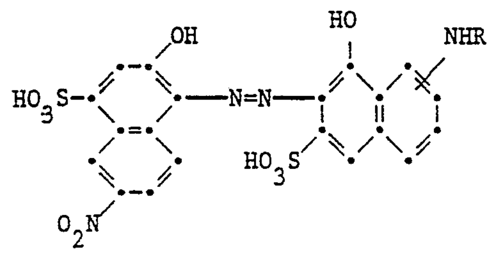

asymmetrischer 1 : 2-Chrom- oder 1 : 2-Kobaltkomplex.

Geht man zur Herstellung der bevorzugten Reaktivfarbstoffe der Formel (1), worin D der Rest eines Azofarbstoffes ist, nicht von den fertigen Aminofarbstoffen, z. B. solchen die weiter vorn beschrieben sind, sondern von Farbstoffvorprodukten, d. h. den Diazo- und Kupplungskomponenten aus, kommen beispielsweise die folgenden in Betracht :

Diazokomponenten

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 2-Amino-naphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7- -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxy-naphthalin-4,8-disulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6- bzw. -4,6-disulfonsäure, 1-(3′-Aminobenzoylamino)-8-hydroxynaphthalin-3,6- bzw. -4,6-disulfonsäure, 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 3-Methylpyrazolon-(5), 1-Phenyl-3-methyl-5-pyrazolon, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1-(5′,7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxypyridon-(2), 1-Aethyl-3-cyan-

oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Als Acylierungsmittel, das ausser der acylierenden Stelle noch einen Reaktivrest enthält, kommt 2,4,6-Trifluor-5-chlorpyrimidin in Betracht.

Die Acylierungen mit dem faserreaktiven Acylierungsmittel führt man zweckmässig unter Verwendung säurebindender Mittel, wie Natriumcarbonat oder Natriumhydroxyd, und unter solchen Bedingungen aus, dass im fertigen Produkt noch austauschbare Halogenatome im Reaktivrest übrigbleiben, d. h. z. B. in organischen Lösungsmitteln oder bei relativ niedrigen Temperaturen in wässerigem Mittel.

Nach dem erfindunggsgemässen Verfahren wird Seide oder seidenhaltiges gemischtes Fasermaterial gefärbt. Als Seide kommt nicht nur die Natur- oder Zuchtseide- (Maulbeereseide, Bombyx mori) sondern auch die verschiedenen Wildseiden, vor allem Tussahseide, ferner Eri- und Fagaraseiden, Nester-Seide, Senegal-Seide, Muga-Seide, sowie Muschel- und Spinnenseide in Betracht. Seidenhaltige Fasermaterialien sind insbesondere Mischungen von Seide mit Polyesterfasern, Acrylfasern, Cellulosefasern, Polyamidfasern oder Wolle. Das genannte Textilmaterial kann dabei in den verschiedensten Verarbeitungsformen vorliegen, z. B. als Faser, Garn, Gewebe oder Gewirke.

Nach dem erfindungsgemässen Verfahren wird das Färben in wässrigem Medium bei einem pH oberhalb von 8, insbesondere von 9 bis 10, vorgenommen. Die Ausführung gestaltet sich so, dass das zu färbende Material bei gewöhnlicher Temperatur, vorzugsweise 20 bis 40 °C, entweder in das Färbebad bei einem Flottenverhältnis von 1 : 50 bis 1 : 150, insbesondere 1 : 80 bis 1 : 120, eingebracht wird und unter gelegentlichem Umrühren während 6 bis 48 Stunden, vorzugsweise 24 Stunden, in dem Färbebad verbleibt, oder in einer Foulardflotte, vorzugsweise mit einem Flottenauftrag 1 : 0,7 bis 1 : 1,3, imprägniert wird und anschliessend in feuchtem Zustand während 6 bis 48 Stunden, insbesondere 24 Stunden, bei einer Temperatur von 20 bis 60 °C gelagert wird. Dabei hängt es vom Material, der Art des Reaktivfarbstoffes und der gewünschten Farbstärke ab, in welchem Temperaturintervall man am vorteilhaftesten arbeitet.

Zur Durchführung des erfindungsgemässen Verfahrens im alkalischen pH-Bereich werden als alkalische säurebindende Mittel beispielsweise Natriumhydroxyd, Kaliumhydroxyd, Trinatriumphosphat, Dinatriumphosphat und insbesondere Natriumcarbonat oder Mischungen von Natriumcarbonat und Natriumhydrogencarbonat gegebenenfalls zusammen mit neutralen Salzen wie z. B. Natriumchlorid verwendet.

In dem erfindungsgemässen Kalt-Verweil- oder Klotz-Kalt-Verweil-Verfahren enthält die Flotte eines oder mehrere der oben genannten alkalischen Mittel und gegebenenfalls übliche Zusätze, wie Netzmittel, beispielsweise Dioctylsulfosuccinat, und Verdickungsmittel, beispielsweise Alginatverdickungen und neutrale anorganische Salze, wie Alkalichloride oder Alkalisulfate.

Ein wichtiges Klotz-Verfahren zur Fixierung der Farbstoffe auf Seide oder seidenhaltige Gewebe ist das Klotz-Aufdock-Verfahren bzw. dessen Variante das Klotz-Verweil-Verfahren.

Gemäss diesen Verfahren lässt man das Textilmaterial nach dem Klotzen auf eine Rolle auflaufen und verweilen, wobei das aufgerollte Textilmaterial luftdicht eingehüllt wird, um das Antrocknen zu verhindern, und um zu verhindern, dass das $CO_2$ der Luft sich mit den Alkalien des aufgerollten Materials umsetzt und dadurch eine ungenügende Farbstoff-Fixierung erfolgt.

Die Farbstoffe werden, je nach der gewünschten Farbtiefe der Färbung in Mengen von etwa 0,1 bis 15 % angewandt.

Nach dem Fixieren werden die Färbungen mit kaltem und heissem Wasser, gegebenenfalls unter Zusatz eines dispergierend wirkenden und die Diffusion der nicht fixierten Anteile fördernden Mittels gründlich gespült.

Eine bevorzugte Ausführungsform ist dadurch gekennzeichnet, dass man die gefärbte Ware in einer wässrigen Waschflotte bei einem pH von 8,5 bis 9 und erhöhter Temperatur, vorzugsweise 70 bis 85 °C, gegebenenfalls in Gegenwart eines nichtionischen Waschmittels, auswäscht.

Die mit den erfindungsgemäss zur Anwendung gelangenden Reaktivfarbstoffen hergestellten Färbungen zeichnen sich durch klare Nuancen aus. Es werden hohe Fixierraten und ein sehr guter Aufbau erzielt, und die Färbungen besitzen gute Lichtechtheiten und sehr gute Nassechtheiten.

In dem Journal of the Society of Dyers and Colourists, Band 98 (1982), Seiten 394-397, werden Kaltverweilverfahren zum Färben von Seide mit Reaktivfarbstoffen beschrieben.

Die nachfolgenden Beispiele dienen zur Erläuterung der Erfindung. Die Temperaturen sind in

Celsiusgraden angegeben. Die Prozentangaben beziehen sich auf Gewichtsprozente, sofern nicht anders vermerkt.

Beispiel 1

In 12 l heissem Wasser werden 90 g des Farbstoffs der Formel

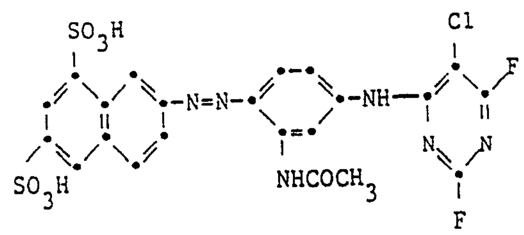

gelöst, 20 g Dioctylsulfosuccinat zugegeben und auf 25° abgekühlt. Der Lösung werden 400 g Soda zugesetzt und homogen verrührt ; anschliessend werden 5 kg Alginatverdicker (6 %-ig) zugemischt und mit Wasser auf ein Volumen von 20 l gestellt. Die so hergestellte Foulardflotte hat einen pH-Wert von 10.

18 kg Seidengewebe mit einem Flächengewicht von 100 g/m² werden auf einem Foulard mit obiger Flotte imprägniert und auf 90 % Gewichtszunahme abgepresst. Das imprägnierte Gewebe wird bei 25° auf eine Walze aufgedockt, mit Plastik luftdicht umhüllt, und während 6 Stunden bei 25 bis 27° gelagert. Das gefärbte Gewebe wird dann auf einer Breitwaschmaschine 10 min bei 40 bis 50° gespült ; anschliessend wird während 15 min bei 80° unter Zusatz von 2 g/l eines nichtionischen Waschmittels — erhalten durch Anlagerung von 10 Aequivalenten Aethylenoxid an p-Nonylphenol — der nicht kovalent gebundene Farbstoff ausgewaschen, wobei der pH-Wert der Waschflotte gegebenenfalls durch Zugabe von Soda auf pH 8,5 bis 9 eingestellt wird. Das Gewebe wird 5 min mit Wasser von 40° und 5 min mit Wasser von 20° gespült, wobei dem letzten Spülbad 1 g/l Essigsäure zugesetzt werden. Nach üblicher Entwässerung und Trocknung wird eine brillante, egale Gelbfärbung erhalten, die sich durch vorzügliche Nassechtheiten auszeichnet.

Wenn man wie in dem Beispiel 1 angegeben verfährt, jedoch anstelle des in dem Beispiel genannten Farbstoffes äquimolare Mengen der in der folgenden Tabelle in Spalte 2 aufgeführten Farbstoffe verwendet, so erhält man sehr nassechte Färbungen in der in Spalte 3 angegebenen Nuance.

(Siehe Tabelle Seite 12 ff.)

Tabelle

| Beispiel | Farbstoff | Nuance |
|---|---|---|
| 1 | 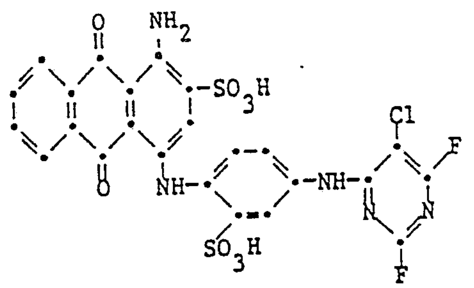 | blau |
| 2 | 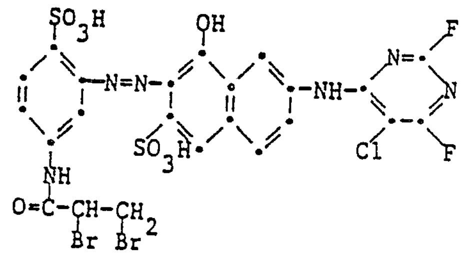 | scharlach |
| 3 | 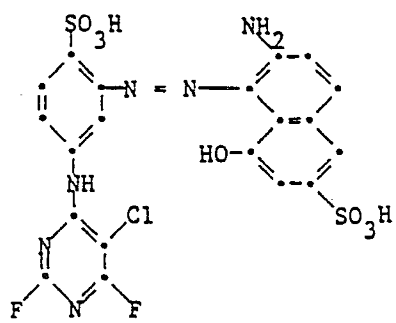 | rot |
| 4 | 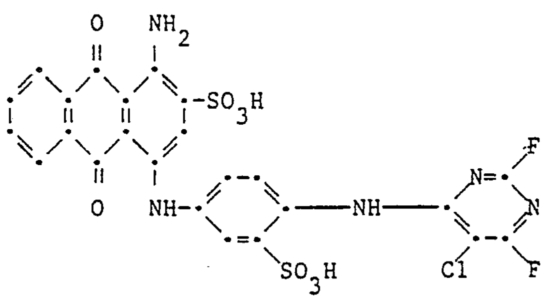 | blau |

Tabelle

| Beispiel | Farbstoff | Nuance |
| --- | --- | --- |
| 5 | 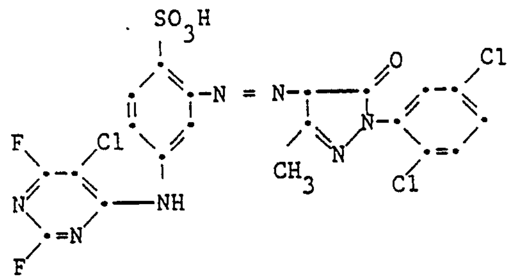 | gelb |
| 6 | 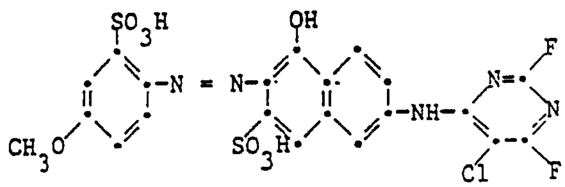 | scharlach |
| 7 | 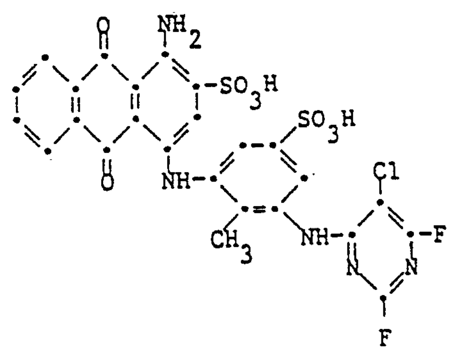 | blau |
| 8 | 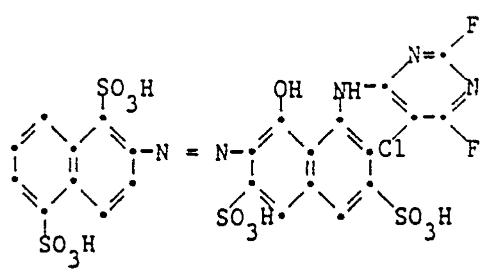 | rot |

Tabelle

| Beispiel | Farbstoff | Nuance |
| --- | --- | --- |
| 9 | 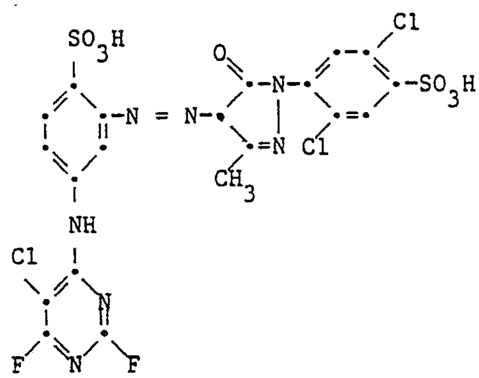 | gelb |
| 10 | 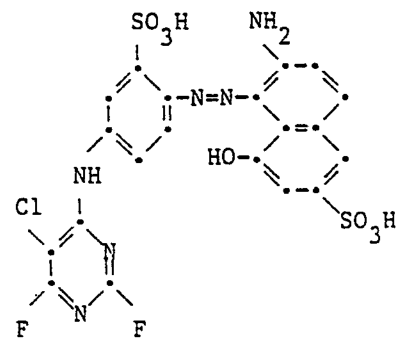 | rot |
| 11 | 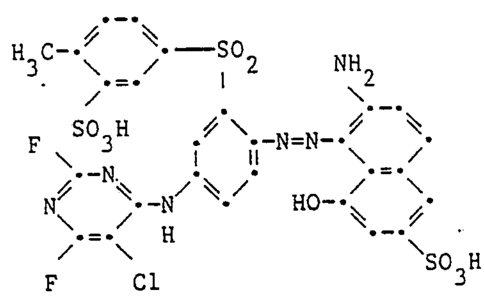 | rot |

Tabelle

| Beispiel | Farbstoff | Nuance |
|---|---|---|
| 12 | 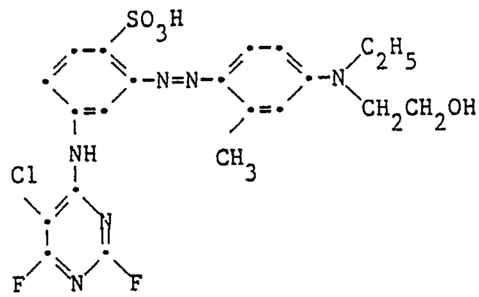 | orange |
| 13 | 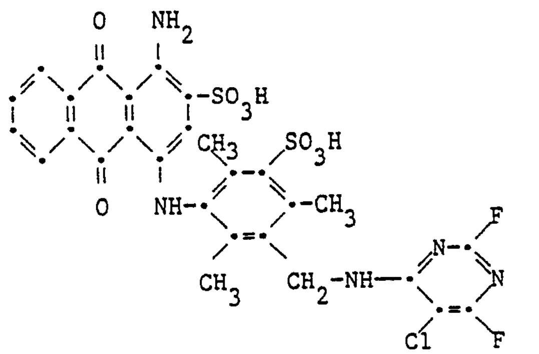 | blau |
| 14 | 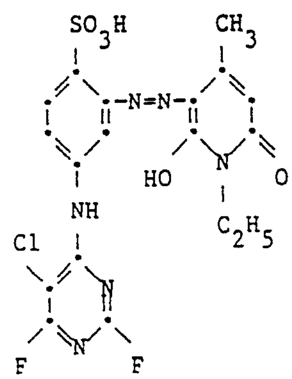 | zitronen-gelb |

**Patentansprüche**

1. Verfahren zum Färben von Seide oder seidenhaltigen gemischten Fasermaterialien mit Reaktivfarbstoffen, dadurch gekennzeichnet, dass man Seide oder seidenhaltige gemischte Fasermaterialien mit Reaktivfarbstoffen der Formel

$$D - [Y]_n \qquad (1)$$

worin D der Rest eines sulfogruppenhaltigen Farbstoffes der Mono- oder Polyazo-, Metallkomplexazo-, Anthrachinon-, Phthalocyanin-, Formazan, Azomethin-, Dioxazin-, Phenazin, Stilben-, Triphenylmethan-, Xanthen-, Thioxanthon-, Nitroaryl-, Naphthochinon-, Pyrenchinon- oder Perylentetracarbimid-Reihe ist, und $[Y]_n$ für n = 1 bis 4 Reaktivreste Y steht, wobei Y 2,4-Difluor-5-chlorpyrimidin-6-yl bedeutet, in wässrigem Medium bei einem pH oberhalb von 8, ohne Zusatz eines dispergierend- und quellendwirkenden Mittels,

a) bei einer Temperatur von 20 bis 40 °C während 6 bis 48 Stunden färbt, oder

b) die Ware imprägniert und die imprägnierte Ware in feuchtem Zustand während 6 bis 48 Stunden bei einer Temperatur von 20 bis 60 °C lagert.

2. Verfahren gemäss Anspruch 1, dadurch gekennzeichnet, dass man Seide oder seidenhaltige gemischte Fasermaterialien mit Reaktivfarbstoffen der Formel (1), worin D, Y und n die in Anspruch 1 angegebenen Bedeutungen haben, in wässriger Foulardflotte, bei einem pH oberhalb von 8 imprägniert und die so behandelte Ware in feuchtem Zustand während 6 bis 48 Stunden, insbesondere 24 Stunden, bei einer Temperatur von 20 bis 60 °C lagert.

3. Verfahren gemäss Anspruch 1, dadurch gekennzeichnet, dass man Seide oder seidenhaltige gemischte Fasermaterialien mit Reaktivfarbstoffen der Formel (1), worin D, Y und n die in Anspruch 1 angegebenen Bedeutungen haben, in wässriger Färbeflotte bei einem pH oberhalb von 8 und einer Temperatur von 20 bis 40 °C während 6 bis 48 Stunden, insbesondere 24 Stunden, färbt.

4. Verfahren gemäss einem der Ansprüche 1 bis 3, dadurch gekennzeichnet, dass man Reaktivfarbstoffe der Formel (1), worin D der Rest eines Mono- oder Diazofarbstoffes ist, verwendet.

5. Verfahren gemäss einem der Ansprüche 1 bis 3, dadurch gekennzeichnet, dass man Reaktivfarbstoffe der Formel (1), worin D der Rest eines Schwermetall-Azofarbstoff-Komplexes ist, verwendet.

6. Verfahren gemäss einem der Ansprüche 1 bis 3, dadurch gekennzeichnet, dass man Reaktivfarbstoffe der Formel (1), worin D der Rest eines Anthrachinonfarbstoffes ist, verwendet.

7. Verfahren gemäss einem der Ansprüche 1 bis 3, dadurch gekennzeichnet, dass man Reaktivfarbstoffe der Formel (1), worin D der Rest eines Kupfer- oder Nickelphthalocyanins, Kupfer-Formazan-Komplexes oder Triphendioxazines ist, verwendet.

8. Verfahren gemäss Anspruch 5, dadurch gekennzeichnet, dass man Reaktivfarbstoffe der Formel (1), worin D der Rest eines 1 : 2-Chrom- oder 1 : 2-Kobaltkomplexazofarbstoffes der Benzol- oder Naphthalinreihe ist, und das Chrom- bzw. Kobaltatom an jeweils eine metallisierbare Gruppe in ortho-Position zur Azobindung gebunden ist, verwendet.

9. Verfahren gemäss Anspruch 4, dadurch gekennzeichnet, dass man Reaktivfarbstoffe der Formel

$$[D_1 - N = N - K] - [Q - Y]_n \qquad (2)$$

verwendet, worin $D_1$ der Rest einer Diazokomponente der Benzol- oder Naphthalinreihe, K der Rest einer Kupplungskomponente der Benzol- oder Naphthalinreihe oder der heterocyclischen Reihe, Q eine Aminobenzoylamino-Gruppe oder ein Brückenglied —N(R)—, und R Wasserstoff oder gegebenenfalls substituiertes $C_{1-4}$-Alkyl ist, Y und n die für Anspruch 4 geltenden Bedeutungen haben, und der Reaktivrest an die Diazokomponente oder an die Kupplungskomponente gebunden ist, oder je eine oder zwei Reaktivrest(e) sowohl an die Diazokomponente als auch an die Kupplungskomponente gebunden ist (sind), oder zwei Reaktivreste an die Kupplungskomponente oder an die Diazokomponente gebunden sind, oder zwei Reaktivreste an die Diazokomponente oder an die Kupplungskomponente und ein Reaktivrest an die Kupplungskomponente oder an die Diazokomponente gebunden sind.

10. Verfahren gemäss Anspruch 9, dadurch gekennzeichnet, dass man Reaktivfarbstoffe der Formel (2), worin R Wasserstoff oder Methyl ist, verwendet.

11. Verfahren gemäss einem der Ansprüche 1 bis 3, dadurch gekennzeichnet, dass man als pH oberhalb 8 einen pH von 9 bis 10 einstellt.

12. Verfahren gemäss einem der Ansprüche 1, 2 und 6 bis 11, dadurch gekennzeichnet, dass man die Ware in Gegenwart eines Verdickers, insbesondere eines Alginatverdickers imprägniert.

13. Verfahren gemäss einem der Ansprüche 1, 2 und 4 und 5, dadurch gekennzeichnet, dass man eine Foulardflotte mit einem Flottenauftrag von 1 : 0,7 bis 1 : 1,3 verwendet.

14. Verfahren gemäss einem der Ansprüche 1 und 3 bis 11, dadurch gekennzeichnet, dass man eine wässrige Färbeflotte mit einem Flottenverhältnis von 1 : 50 bis 1 : 150 verwendet.

15. Verfahren gemäss einem der Ansprüche 1 bis 14, dadurch gekennzeichnet, dass man die gefärbte Ware in einer wässrigen Waschflotte bei einem pH von 8,5 bis 9 und erhöhter Temperatur, vorzugsweise 70 bis 85 °C, gegebenenfalls in Gegenwart eines nichtionischen Waschmittels auswäscht.

**Claims**

1. A process for dyeing silk or silk-containing fibre blends with reactive dyes, which comprises dyeing or impregnating silk or silk-containing fibre blends with reactive dyes of the formula

$$D-[-Y]_n \qquad (1)$$

wherein D is the radical of a sulfo group-containing dye of the mono- or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, and $[Y]_n$ is n = 1 to 4 reactive radicals Y, where Y is 2,4-difluoro-5-chloropyrimidin-6-yl, in aqueous medium at a pH value above 8, without the addition of a dispersant or swelling agent, where

a) dyeing is carried out at a temperature from 20 to 40 °C for 6 to 48 hours, or

b) the goods are impregnated and the impregnated goods are stored in the moist state for 6 to 48 hours at a temperature from 20 to 60 °C.

2. A process according to claim 1, which comprises impregnating silk or silk-containing fibre blends with reactive dyes of the formula (1), wherein D, Y and n are as defined in claim 1, in an aqueous padding liquor at a pH above 8, and storing the treated goods in the moist state for 6 to 48 hours, in particular for 24 hours, at a temperature from 20 to 60 °C.

3. A process according to claim 1, which comprises dyeing silk or silk-containing fibre blends with reactive dyes of the formula (1), wherein D, Y and n are as defined in claim 1, in an aqueous dye liquor at a pH above 8 and at a temperature from 20 to 40 °C for 6 to 48 hours, in particular for 24 hours.

4. A process according to any one of claims 1 to 3, which comprises the use of reactive dyes of the formula (1), wherein D is the radical of a monoazo or diazo (sic) dye.

5. A process according to any one of claims 1 to 3, which comprises the use of reactive dyes of the formula (1), wherein D is the radical of a heavy metal azo dye complex.

6. A process according to any one of claims 1 to 3, which comprises the use of reactive dyes of the formula (1), wherein D is the radical of an anthraquinone dye.

7. A process according to any one of claims 1 to 3, which comprises the use of reactive dyes of the formula (1), wherein D is the radical of a copper or nickel phthalocyanine, of a copper formazan complex or of a triphendioxazine.

8. A process according to claim 5, which comprises the use of reactive dyes of the formula (1), wherein D is the radical of a 1 : 2 chromium or 1 : 2 cobalt complex azo dye of the benzene or naphthalene series, the chromium or cobalt atom being attached in each case to a metallisable group in the ortho-position to the azo bond.

9. A process according to claim 4, which comprises the use of reactive dyes of the formula

$$[D_1 - N = N - K]-[Q - Y]_n \qquad (2)$$

wherein $D_1$ is the radical of a diazo component of the benzene or naphthalene series, K is the radical of a coupling component of the benzene, naphthalene or heterocyclic series, Q is an aminobenzoylamino group or a bridge member —N(R)—, and R is hydrogen or unsubstituted or substituted $C_1$-$C_4$-alkyl, Y and n have the meanings valid for claim 4, and the reactive radical is attached to the diazo component or to the coupling component, or both the diazo component and the coupling component each carry one or two reactive radicals, or two reactive radicals are attached to the coupling component or to the diazo component, or two reactive radicals are attached to the diazo component or to the coupling component, and one reactive radical is attached to the coupling component or to the diazo component.

10. A process according to claim 9, which comprises the use of reactive dyes of the formula (2), wherein R is hydrogen or methyl.

11. A process according to any one of claims 1 to 3, wherein the pH of above 8 is adjusted to 9 to 10.

12. A process according to any one of claims 1, 2 and 6 to 11, wherein the goods are impregnated in the presence of a thickener, in particular an alginate thickener.

13. A process according to any one of claims 1, 2, and 4 and 5, which comprises the use of a padding liquor at a liquor to goods ratio of 0.7 : 1 to 1.3 : 1.

14. A process according to any one of claims 1 and 3 to 11, which comprises the use of an aqueous dyeing liquor at a liquor to goods ratio of 50 : 1 to 150 : 1.

15. A process according to any one of claims 1 to 14, which comprises washing the dyed goods with an aqueous wash liquor at a pH of 8.5 to 9 and at elevated temperature, preferably in the range from 70 to 85 °C, optionally in the presence of a nonionic detergent.

**Revendications**

1. Procédé pour la teinture de la soie ou de matériaux fibreux mélangés contenant de la soie, avec des colorants réactifs, caractérisé par le fait que l'on

a) teint de la soie ou des matériaux fibreux mélangés contenant de la soie, à une température de 20 à 40 °C pendant 6 à 48 heures, ou

b) imprègne l'article et abandonne l'article imprégné à l'état humide pendant 6 à 48 heures à une température de 20 à 60 °C, dans un milieu aqueux, à un pH supérieur à 8, sans addition d'un agent à effet dispersant et gonflant, avec des colorants réactifs de formule

$$D-[Y]_n \qquad (1)$$

dans laquelle D représente le reste d'un colorant de la série mono- ou poly-azoïque, azoïque à complexe métallique, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide, contenant des groupes sulfo, et $[Y]_n$ représente n = 1 à 4 radicaux réactifs Y, Y représentant le radical 2,4-difluoro-5-chloropyrimidine-6-yle.

2. Procédé selon la revendication 1, caractérisé par le fait que l'on imprègne de la soie, ou des matériaux fibreux mélangés contenant de la soie, dans un bain de foulardage aqueux, à un pH supérieur à 8, avec des colorants réactifs de formule (1), dans lesquels D, Y et n ont les significations données dans la revendication 1, et on abandonne à l'état humide l'article ainsi traité, pendant 6 à 48 heures, en particulier pendant 24 heures, à une température de 20 à 60 °C.

3. Procédé selon la revendication 1, caractérisé par le fait que l'on teint de la soie, ou des matériaux fibreux mélangés contenant de la soie, dans un bain de teinture aqueux à un pH supérieur à 8 et à une température de 20 à 40 °C, pendant 6 à 48 heures, en particulier pendant 24 heures, avec des colorants réactifs de formule (1), dans lesquels D, Y et n ont les significations données dans la revendication 1.

4. Procédé selon l'une des revendications 1 à 3, caractérisé par le fait que l'on utilise des colorants réactifs de formule (1) dans lesquels D est le reste d'un colorant mono- ou diazoïque.

5. Procédé selon l'une des revendications 1 à 3, caractérisé par le fait que l'on utilise des colorants réactifs de formule (1) dans lesquels D est le reste d'un complexe colorant azoïque-métal lourd.

6. Procédé selon l'une des revendications 1 à 3, caractérisé par le fait que l'on utilise des colorants réactifs de formule (1) dans lesquels D est le reste d'un colorant anthraquinonique.

7. Procédé selon l'une des revendications 1 à 3, caractérisé par le fait que l'on utilise des colorants réactifs de formule (1) dans lesquels D est le reste d'une phtalocyanine de cuivre ou de nickel, d'un complexe formazan-cuivre ou d'une triphénodioxazine.

8. Procédé selon la revendication 5, caractérisé par le fait que l'on utilise des colorants réactifs de formule (1) dans lesquels D est le reste d'un colorant azoïque de la série du benzène ou du naphtalène, à complexe de chrome 1 : 2 ou de cobalt 1 : 2, et l'atome de chrome, ou respectivement de cobalt, est lié dans chaque cas à un groupe métallable en position ortho par rapport à la liaison azoïque.

9. Procédé selon la revendication 4, caractérisé par le fait que l'on utilise des colorants réactifs de formule

$$[D_1 - N = N - K]-[Q - Y]_n \qquad (2)$$

dans lesquels $D_1$ est le reste d'un composant diazo de la série du benzène ou du naphtalène, K est le reste d'un composant de copulation de la série du benzène ou du naphtalène ou de la série hétérocyclique, Q est un groupe amino-benzoylamino ou un chaînon pontant —N(R)—, et R est un atome d'hydrogène ou un groupe alkyle en $C_1$-$C_4$ éventuellement substitué, Y et n ont les significations valables pour la revendication 4, et le radical réactif est lié au composant diazo ou au composant de copulation, ou chacun de deux radicaux réactifs ou les deux est(sont) lié(s) aussi bien au composant diazo qu'au composant de copulation, ou deux radicaux réactifs sont liés au composant de copulation ou au composant diazo, ou deux radicaux réactifs sont liés au composant diazo ou au composant de copulation et un radical réactif est lié au composant de copulation ou au composant diazo.

10. Procédé selon la revendication 9, caractérisé par le fait que l'on utilise des colorants réactifs de formule (2) dans lesquels R est un atome d'hydrogène ou le groupe méthyle.

11. Procédé selon l'une des revendications 1 à 3, caractérisé par le fait qu'en tant que pH supérieur à 8, on ajuste un pH de 9 à 10.

12. Procédé selon l'une des revendications 1, 2 et 6 à 11, caractérisé par le fait que l'on imprègne l'article en présence d'un épaississant, en particulier un épaississant de type alginate.

13. Procédé selon l'une des revendications 1, 2 et 4 et 5, caractérisé par le fait que l'on utilise un bain de foulardage à une adsorption de bain allant de 1 : 0,7 à 1 : 1,3.

14. Procédé selon l'une des revendications 1 et 3 à 11, caractérisé par le fait que l'on utilise un bain de teinture aqueux à un rapport de bain allant de 1 : 50 à 1 : 150.

15. Procédé selon l'une des revendications 1 à 14, caractérisé par le fait qu'on lave l'article teint dans un bain de lavage aqueux à un pH de 8,5 à 9 et à une température élevée, de préférence à 70-85 °C, éventuellement en présence d'un détergent non ionique.